# EUROPÄISCHE PATENTANMELDUNG

(11) **EP 4 817 894 A1**
(43) Veröffentlichungstag der Anmeldung: **07.10.2026**
(21) Anmeldenummer: 26162390.4
(22) Anmeldetag: 04.03.2026
(51) Int. Cl.: B60B 27/00, B60B 27/02, B60B 35/02, B60B 35/04

(54) **RADLAGERUNG EINER ACHSE UND RADNABE**

(30) Priorität: 02.04.2025 DE 102025112823
(71) Anmelder: BPW Bergische Achsen Kommanditgesellschaft, 51674 Wiehl (DE)
(72) Erfinder: Siebel, Reiner, 53804 Much (DE)
(74) Vertreter: DREISS Patentanwälte PartG mbB

(57) **Zusammenfassung**

Die Erfindung betrifft eine Radlagerung (10) einer sich entlang einer Achsenlängsachse (14) ersteckenden Achse (12) umfassend: einen Achskörper (18), eine Radnabe (16) mit im montierten Zustand einer Fahrzeugaußenseite zugewandten Flanschelementen (20) als Aufnahme für ein Fahrzeugrad (22), ein zwischen dem Achskörper und der Radnabe angeordnetes Wälzlager (26), das einen Innenring (28), einen Außenring (32), zwischen dem Innenring und dem Außenring angeordnete Wälzkörper (40) und ein Dichtungselement (44) umfasst, wobei der Innenring und der Außenring jeweils eine radial innen liegende Innenseite und jeweils eine radial außen liegende Außenseite aufweisen, wobei die Innenseite des Außenrings einen mit den Wälzkörpern in Berührkontakt stehenden Wälzabschnitt und einen axial neben dem Wälzabschnitt liegenden, mit dem Dichtungselement in Kontakt stehenden Dichtabschnitt aufweist, wobei die Innenseite des Innenrings drehfest mit dem Achskörper und die Außenseite des Außenrings drehfest mit der Radnabe verbunden sind.

## Beschreibung

Die Erfindung betrifft eine Radlagerung einer Achse und eine Radnabe, insbesondere eines Nutzfahrzeugs oder eines Nutzfahrzeuganhängers.

Fahrzeuge, insbesondere Nutzfahrzeuge oder Nutzfahrzeuganhänger, umfassen in der Regel drehfest mit einem Fahrzeugrahmen und/oder Fahrzeuganhänger verbundene Achskörper, auf denen Radnaben drehbar gelagert angeordnet sind. Die Radnaben weisen wiederum Flanschelemente als Aufnahme für Fahrzeugräder auf. Zur Lagerung der Radnabe ist zwischen der Radnabe und dem Achskörper ein Wälzlager angeordnet, insbesondere ein mehrreihiges Wälzlager, das einen Innenring, einen Außenring, zwischen dem Innenring und dem Außenring angeordnete Wälzkörper und ein Dichtungselement umfasst. Das Wälzlager und die korrespondierend dazu angeordnete Lagerungsfläche der Radnabe weisen eine große Erstreckung entlang einer Längsachse der Achse auf. Diese große Erstreckung ist erforderlich, um eine präzise Lagerung der Radnabe zu gewährleisten. Ebenso ist die große Erstreckung der Lagerungsfläche erforderlich, um ein Verschieben und/oder Auswandern des Dichtungselements durch während des Betriebs der Radlagerung wirkende Vibrationen und/oder Kräfte und/oder Drehmomente zu verhindern, was zum Verlust der Dichtwirkung führen kann. Dies hat zur Folge, dass Schmiermittel aus dem Wälzlager austreten und die Lagerung, beispielsweise aufgrund von Überhitzung und/oder Verschleiß, ausfallen kann, was insbesondere bei funktionskritischen Radlagerungen verhindert werden muss.

Die große Erstreckung des Wälzlagers und der Lagerungsfläche der Radnabe hat zur Folge, dass der Außenring des Wälzlagers und die Lagerungsfläche der Radnabe bei deren Montage oder Demontage entlang einer großen Erstreckung relativ zueinander verschoben werden müssen. Insbesondere bei einer kraftschlüssigen Verbindung des Außenrings und der Radnabe, insbesondere in Form eines Presssitzes, müssen zum Montieren des Außenrings große Kräfte aufgebracht werden, um ein Verschieben entlang der vergleichsweise großen Erstreckung zu ermöglichen, was zu hohen Montagekosten und Prozessabweichen führen kann. Ebenso besteht dadurch ein hohes Risiko von Beschädigungen der Radnabe und/oder des Achskörpers und/oder des Wälzlagers während des Montagevorgangs.

Aus der WO 2013/054280 A1 ist eine Radlagerung mit einem Achskörper, einer Radnabe und einem zwischen dem Achskörper und der Radnabe angeordneten Wälzlager bekannt, bei der das Wälzlager und die Lagerungsfläche der Radnabe eine entsprechend lange Erstreckung entlang der Achsenlängsachse aufweisen.

Aus der DE 10 2015 218 865 A1, DE 10 2014 212 582 A1, DE 10 2016 211 196 A1 und der DE 10 2019 200 443 A1 sind Radlagerungen bekannt, bei denen am Außenring des Wälzlagers Ausnehmungen vorgesehen sein können.

Der Erfindung liegt die Aufgabe zu Grunde, eine Radlagerung bereitzustellen, die eine einfache Montage ermöglicht und die ein Verschieben und/oder Auswandern des Dichtrings während des Betriebs der Radlagerung verhindert. Ferner liegt der Erfindung die Aufgabe zu Grunde, eine entsprechend geeignete Radnabe bereitzustellen.

Diese Aufgabe wird gelöst durch eine Radlagerung nach Anspruch 1. Die Radlagerung ist dazu ausgebildet, eine sich entlang einer Achsenlängsachse erstreckende, angetriebene und/oder nicht angetriebene Achse zu lagern.

Die Radlagerung umfasst einen, insbesondere hohl und/oder massiv ausgebildeten, Achskörper, der insbesondere dazu geeignet ist, Radlasten aufzunehmen. Ferner umfasst die Radlagerung eine Radnabe mit im montierten Zustand einer Fahrzeugaußenseite zugewandten Flanschelemente als Aufnahme für ein Fahrzeugrad. Die Radlagerung ist also in einem, insbesondere in einem Nutzfahrzeug oder einem Nutzfahrzeuganhänger, montierten Zustand derart angeordnet, dass die Flanschelemente einer Fahrzeugaußenseite zugewandt angeordnet sind. Die Flanschelemente sind also an einem distalen Ende und/oder in distaler Richtung der Radlagerung angeordnet.

Weiter umfasst die Radlagerung ein zwischen dem Achskörper und der Radnabe angeordnetes Wälzlager, das einen Innenring, einen Außenring, zwischen dem Innenring und dem Außenring angeordnete Wälzkörper und ein Dichtungselement umfasst. Das Dichtungselement ist insbesondere als Radialwellendichtring ausgebildet und insbesondere auf einer der Fahrzeugaußenseite abgewandten Fahrzeuginnenseite angeordnet.

Der Innenring und der Außenring weisen jeweils eine radial innen liegende Innenseite und jeweils eine radial außen liegende Außenseite auf. Die Innenseite des Außenrings weist einen mit den Wälzkörpern in Berührkontakt stehenden Wälzabschnitt auf. Ferner weist die Innenseite des Außenrings einen axial, insbesondere axial entlang der Achsenlängsachse, neben dem Wälzabschnitt liegenden, mit dem Dichtungselement in Kontakt stehenden Dichtabschnitt auf. Es ist möglich, dass sich der Dichtabschnitt unmittelbar axial entlang der Achsenlängsachse an den Wälzabschnitt anschließt. Alternativ ist es möglich, dass zwischen dem Wälzabschnitt und dem Dichtabschnitt mindestens ein Zwischenabschnitt angeordnet ist. Es ist bevorzugt, dass die Außenseite des Innenrings einen mit dem Dichtungselemente stehenden weiteren Dichtabschnitt aufweist.

Die Innenseite des Innenrings ist drehfest mit dem Achskörper und die Außenseite des Außenrings ist drehfest mit der Radnabe verbunden. Insbesondere ist der Innenring über einen Presssitz drehfest mit dem Achskörper und/oder der Außenrings über einen Presssitz drehfest mit der Radnabe verbunden.

Die Radnabe weist in einem Bereich, an dem die Außenseite des Außenrings anliegt, eine sich wenigstens weitgehend, insbesondere komplett, in einem dem Dichtabschnitt gegenüberliegenden Bereich erstreckende, in axialer Richtung geschlossene Ausnehmung auf. Die Ausnehmung ist axial durch einen Anlagebereich, in dem die Radnabe und die Außenseite des Außenrings aneinander, insbesondere radial, anliegen, begrenzt.

Ergänzend hierzu kann der Außenring eine in axialer Richtung geschlossene Ausnehmung aufweisen, die sich wenigstens weitgehend, insbesondere komplett, in einem Bereich, der dem Dichtabschnitt gegenüberliegt, erstreckt. Die Ausnehmung ist axial durch einen Anlagebereich, in dem die Radnabe und die Außenseite des Außenrings aneinander, insbesondere radial, anliegen, begrenzt.

Die Ausnehmung ist insbesondere an einer der Fahrzeugaußenseite zugewandten Seite und/oder an einer der Fahrzeugaußenseite abgewandten Seite geschlossen. Insbesondere ist die Ausnehmung an einer Fahrzeugaußenseite zugewandten Seite und an einer der Fahrzeugaußenseite abgewandten Seite axial geschlossen. Insbesondere ist die Ausnehmung an einer Seite, insbesondere an einer der Fahrzeugaußenseite abgewandten Seite, durch den Anlagebereich geschlossen. Die Ausnehmung ist also axial beiderseits durch die Radnabe und/oder den Außenring begrenzt. Dies ermöglicht eine einfache Montage der Radlagerung und verhindert ein Verschieben und/oder Auswandern des Dichtungselements.

Wenn der Außenring in einem gesamten Bereich, der dem Dichtabschnitt gegenüberliegt, insbesondere in einem dem Wälzabschnitt abgewandten Endbereich des Dichtabschnitts gegenüberliegenden Bereich, nicht, insbesondere nicht radial, an der Radnabe anliegt, kann sich der Außenring durch während des Betriebs der Radlagerung wirkende Vibrationen und/oder Kräfte und/oder Drehmomente geringfügig aufweiten und/oder die Vibrationen und/oder Kräfte und/oder Drehmomente an das Dichtungselement übertragen. Dies hat zur Folge, dass das Dichtungselement durch die während des Betriebs der Radlagerung wirkende Vibrationen und/oder Kräfte und/oder Drehmomente axial entlang der Achsenlängsachse verschoben werden und/oder auswandern kann, was zum Verlust der Dichtwirkung führen kann. Dies kann durch den Anlagebereich, in dem die Radnabe und die Außenseite des Außenrings aneinander anliegen, wirksam und auf einfache Weise verhindert werden. Gleichzeitig kann durch die Ausnehmung die Kontaktfläche, in welcher der Außenring und die Radnabe in Berührkontakt stehen, reduziert werden, wodurch die zur Montage und/oder Demontage der Radlagerung notwendigen Kräfte reduziert werden können.

In einer bevorzugten Ausführungsform ist vorgesehen, dass die Ausnehmung als umlaufende Ringausnehmung, insbesondere als um die Achsenlängsachse umlaufende Ringausnehmung und/oder Ringnut, ausgebildet ist. Dies ermöglicht eine einfache Herstellung der Ausnehmung.

Es ist bevorzugt, dass die Radnabe in einem Bereich, an dem die Außenseite des Außenrings anliegt und der dem Wälzabschnitt gegenüberliegt, eine, insbesondere um die Achsenlängsachse, umlaufende Stützfläche aufweist. Ferner ist bevorzugt, dass die Radnabe in dem Anlagebereich eine mit dem Außenring in Berührkontakt stehende, insbesondere um die Achsenlängsachse, umlaufende Anlagefläche aufweist. Es ist bevorzugt, dass die Stützfläche und die Anlagefläche konzentrisch zueinander, insbesondere in Bezug zu der Achsenlängsachse, angeordnet sind und insbesondere den gleichen Innendurchmesser aufweisen. Dies ermöglicht eine einfache Herstellung der Radnabe und eine einfache Montage der Radlagerung. Zusätzlich kann dadurch ein Verschieben und/oder Auswandern des Dichtungselements auf besonders einfache Weise verhindert werde. Insbesondere wird es dadurch auf einfache Weise ermöglicht, die Ausnehmung herzustellen, nachdem die zum Anliegen an dem Außenring ausgebildeten Bereiche hergestellt wurden.

Weiter ist von Vorteil, wenn sich die Flanschelemente axial entlang der Achsenlängsachse in einem äußeren Abschnitt der Radlagerung und/oder der Radnabe und/oder des Wälzlagers erstrecken. Dieser äußere Abschnitt erstreckt sich also insbesondere in einem der Fahrzeugaußenseite zugewandten und/oder distalen Abschnitt der Radlagerung und/oder Radnabe und/oder des Wälzlagers. Es ist von Vorteil, wenn die Radlagerung und/oder die Radnabe und/oder das Wälzlager einen axial entlang der Achsenlängsachse neben dem äußeren Abschnitt liegenden inneren Abschnitt umfasst. Dieser innere Abschnitt erstreckt sich also insbesondere in einem der Fahrzeugaußenseite abgewandten und/oder proximalen Abschnitt der Radlagerung und/oder Radnabe und/oder des Wälzlagers. Ferner ist von Vorteil, wenn die Ausnehmung und der Anlagebereich in dem inneren Abschnitt, insbesondere in einem den Flanschelementen abgewandten Endbereich des inneren Abschnitts, angeordnet sind. Der Endbereich umfasst insbesondere 1/3, weiter insbesondere 1/4, weiter insbesondere 1/5, der Längserstreckung des Wälzlagers entlang der Achsenlängsachse. Dadurch wird eine besonders einfache Montage der Radlagerung ermöglicht.

Ferner ist von Vorteil, wenn sich der Anlagebereich entlang der Achsenlängsachse in einem dem Wälzabschnitt abgewandten Endbereich des Dichtabschnitts erstreckt. Dieser Endbereich des Dichtabschnitts ist somit insbesondere auch den Flanschelementen abgewandt angeordnet. Der Endbereich umfasst insbesondere 1/3, weiter insbesondere 1/4, weiter insbesondere 1/5, der Längserstreckung des Dichtabschnitts entlang der Achsenlängsachse. Dadurch wird die Dichtwirkung des Dichtelements besonders zuverlässig gewährleistet.

In einer bevorzugten Ausführungsform ist vorgesehen, dass die Erstreckung der Ausnehmung entlang der Achsenlängsachse 2 bis 100, insbesondere 5 bis 50, weiter insbesondere 10 bis 20, Mal der Differenz des Innenradius der Radnabe im Bereich der Ausnehmung und des Innenradius der Radnabe im Bereich, in dem die Außenseite des Außenrings an der Radnabe anliegt, insbesondere in einem dem Wälzabschnitt gegenüberliegenden Bereich und/oder in dem Anlagebereich, beträgt. Die Erstreckung der Ausnehmung entlang der Achsenlängsachse beträgt also insbesondere 2 bis 100, insbesondere 5 bis 50, weiter insbesondere 10 bis 20, Mal der Erstreckung der Ausnehmung radial zu der Achsenlängsachse. Dies trägt zu einer besonders einfachen Montage der Radlagerung bei.

Unabhängig davon ist bevorzugt, dass die Erstreckung der Ausnehmung entlang der Achsenlängsachse 0,02 bis 0,2, insbesondere 0,05 bis 0,15, weiter insbesondere 0,07 bis 0,1, Mal der Erstreckung des Wälzlagers entlang der Achsenlängsachse beträgt. Dies trägt zu einer besonders einfachen Montage der Radlagerung bei.

Dessen ungeachtet ist bevorzugt, dass die Differenz des Innenradius der Radnabe im Bereich der Ausnehmung und des Innenradius der Radnabe im Bereich, in dem die Außenseite des Außenrings an der Radnabe anliegt, insbesondere in einem dem Wälzabschnitt gegenüberliegenden Bereich und/oder in dem Anlagebereich, zwischen 0,05 und 5 mm, insbesondere zwischen 0,1 und 2 mm, weiter insbesondere zwischen 0,2 und 1 mm, beträgt. Erstreckung der Ausnehmung radial zu der Achsenlängsachse beträgt also insbesondere zwischen 0,05 und 5 mm, insbesondere zwischen 0,1 und 2 mm, weiter insbesondere zwischen 0,2 und 1 mm. Dadurch werden eine einfache Montage der Radlagerung ermöglicht und eine hinreichende Stabilität der Radnabe gewährleistet.

Losgelöst davon ist bevorzugt, dass die Erstreckung des Anlagebereichs, insbesondere der Radnabe, und/oder der Anlagefläche entlang der Achsenlängsachse 0,1 bis 2, insbesondere 0,2 bis 1,5, weiter insbesondere 0,5 bis 1,2, Mal der Erstreckung der Ausnehmung entlang der Achsenlängsachse beträgt. Dies ermöglicht eine besonders einfache Herstellung der Ausnehmung und eine einfache Montage der Radlagerung.

Dessen ungeachtet ist von Vorteil, wenn die Erstreckung des Anlagebereichs und/oder der Anlagefläche entlang der Achsenlängsachse 0,1 bis 2, insbesondere 0,2 bis 1,5, weiter insbesondere 0,3 bis 1, Mal der Erstreckung des Dichtungselements entlang der Achsenlängsachse beträgt. Dadurch wird die Dichtwirkung des Dichtelements besonders zuverlässig gewährleistet.

Weiter ist von Vorteil, wenn die Radlagerung ein weiteres zumindest teilweise in dem Wälzlager angeordnetes Dichtungselement umfasst, das insbesondere an einer der Fahrzeugaußenseite zugewandten Seite des Wälzlagers angeordnet ist. Dies trägt zu einer besonders zuverlässigen Dichtwirkung bei.

In einer bevorzugten Ausführungsform ist vorgesehen, dass die Radlagerung ein zusätzliches Dichtungselement umfasst, das zwischen dem Innenring und dem Achskörper angeordnet ist. Das zusätzliche Dichtungselement ist insbesondere zwischen einer der Fahrzeuginnenseite zugewandten Seite des Innenrings und dem Achskörper angeordnet. Dies trägt zu einer besonders zuverlässigen Dichtwirkung bei und verhindert, dass Schmiermittel zwischen radial um die Achsenlängsachse umlaufende und sich entlang der Achsenlängsachse erstreckende Flächen des Innenrings und des Achskörpers eindringen kann.

Es ist bevorzugt, dass das Wälzlager ein mehrreihiges, insbesondere ein zweireihiges, Wälzlager ist, wobei das Wälzlager mehrere, insbesondere zwei, separat voneinander bereitgestellte Innenringe umfasst, die über ein Verbindungselement verschiebefest entlang der Achsenlängsachse miteinander verbunden sind. Das Verbindungselement ist insbesondere C- und/oder U-förmig ausgebildet. Es umfasst also einen Basisabschnitt, der sich insbesondere entlang und/oder parallel zu der Achsenlängsachse erstreckt, und mindestens zwei Schenkel, die sich vorzugsweise orthogonal zu dem Basisabschnitt, insbesondere radial nach außen, erstrecken. Die Schenkel greifen insbesondere in komplementär angeordnete Ausnehmungen der Innenringe ein und verhindern eine axiale Relativbewegung der Innenringe entlang der Achsenlängsachse. Dies trägt zu einer einfachen Montage der Radlagerung bei.

Ferner ist bevorzugt, dass das Wälzlager ein mehrreihiges, insbesondere ein zweireihiges, Wälzlager ist, wobei das Wälzlager mehrere, insbesondere zwei, separat voneinander bereitgestellte Außenringe umfasst. Insbesondere ist vorgesehen, dass die Außenringe beabstandet zueinander angeordnet sind. Die Außenringe stehen also auch im montierten Zustand der Radlagerung in keinem unmittelbaren Berührkontakt zueinander. Dadurch wird eine besonders einfache Montage der Radlagerung ermöglicht.

Es ist von Vorteil, dass das Wälzlager ein zweireihiges Schrägkugellager oder Kegelrollenlager ist, wobei zwischen den mehreren Außenringen mindestens ein durch die Radnabe gebildeter Trennabschnitt angeordnet ist. Der Trennabschnitt umfasst mindestens eine und insbesondere mehrere, insbesondere zwei, Schultern, gegen die sich die mehreren Außenringe axial abstützen können. Es ist bevorzugt, dass die Lagerringe und/oder die Wälzkörper eine O-Lageranordnung bilden. Dies trägt zu einem besonders funktionssicheren Betrieb der Radlagerung bei.

Weiter ist von Vorteil, wenn der Trennabschnitt eine, insbesondere als Schmierstoffreservoir wirksame, Aussparung aufweist. Insbesondere ist die Aussparung mittig in dem Trennabschnitt entlang der Achsenlängsachse angeordnet und/oder nach radial innen geöffnet ist. Dies trägt zu einer sicheren Schmierung des Wälzlagers bei.

Ferner ist von Vorteil, wenn die Radnabe, insbesondere an einer Fahrzeugaußenseite und/oder an einer Fahrzeuginnenseite, eine Einführschräge für den Außenring aufweist. Dadurch wird eine einfache Montage der Radlagerung ermöglicht.

Die der Erfindung zugrundeliegende, eingangs genannte Aufgabe wird ferner gelöst durch eine Radnabe nach Anspruch 16. Die Radnabe umfasst im montierten Zustand, insbesondere in einem in einer Radlagerung, insbesondere in einer Radlagerung eines Nutzfahrzeugs oder Nutzfahrzeuganhängers, montierten Zustand, einer Fahrzeugaußenseite zugewandte Flanschelemente als Aufnahme für ein Fahrzeugrad. Die Radnabe erstreckt sich entlang einer Achsenlängsachse. Insbesondere weist die Radnabe eine sich insbesondere entlang der Achsenlängsachse erstreckende Öffnung zur Aufnahme eines sich entlang der Längsachse erstreckenden Achskörpers auf. Die Radnabe ist dazu ausgebildet, mit einem einen Innenring, einen Außenring, Wälzkörper und ein Dichtungselement umfassenden Wälzlagers in Kontakt zu treten. Insbesondere ist eine Innenseite der Radnabe, insbesondere eine die Öffnung radial begrenzende Innenseite der Radnabe, dazu ausgebildet, mit dem Wälzlager, insbesondere dem Außenring des Wälzlagers, in Kontakt zu treten. Die Radnabe weist in einem Bereich, der dazu ausgebildet ist, an einer Außenseite des Außenrings anzuliegen, eine in axialer Richtung geschlossene Ausnehmung auf.

Die Ausnehmung ist axial durch einen Anlagebereich, in dem die Radnabe dazu ausgebildet ist, an einer Außenseite des Außenrings, insbesondere radial, anzuliegen, begrenzt. Die Ausnehmung ist insbesondere an einer im montierten Zustand der Fahrzeugaußenseite zugewandten Seite und/oder an einer im montierten Zustand der Fahrzeugaußenseite abgewandten Seite geschlossen. Insbesondere ist die Ausnehmung an einer im montierten Zustand der Fahrzeugaußenseite zugewandten Seite und an einer der Fahrzeugaußenseite abgewandten Seite axial geschlossen. Dies ermöglicht eine einfache Montage der Radnabe in einer Radlagerung und verhindert ein Verschieben und/oder Auswandern des Dichtungselements des Wälzlagers.

Weitere Merkmale und Vorteile der Erfindung sind Gegenstand der nachfolgenden Beschreibung bevorzugter Ausführungsbeispiele.

In der Zeichnung zeigt:
- Fig. 1: einen Längsschnitt einer ersten Ausführungsform einer erfindungsgemäßen Radlagerung entlang einer parallel zu einer Achsenlängsachse verlaufenden Schnittebene;
- Fig. 2: einen Längsschnitt einer ersten Ausführungsform einer erfindungsgemäßen Radnabe in einem entlang einer parallel zu der Achsenlängsachse verlaufenden Schnittebene gemäß Figur 1;
- Fig. 3: einen Längsschnitt der Radlagerung gemäß Figur 1 in einem in Figur 1 mit III bezeichneten Bereich;
- Fig. 4: einen Längsschnitt der Radlagerung gemäß der Figuren 1 und 3 in einem in Figur 3 mit IV bezeichneten Bereich; und
- Fig. 5: einen Längsschnitt einer zweiten Ausführungsform einer erfindungsgemäßen Radlagerung entlang einer parallel zu einer Achsenlängsachse verlaufenden Schnittebene in einem Bereich gemäß Figur 4.

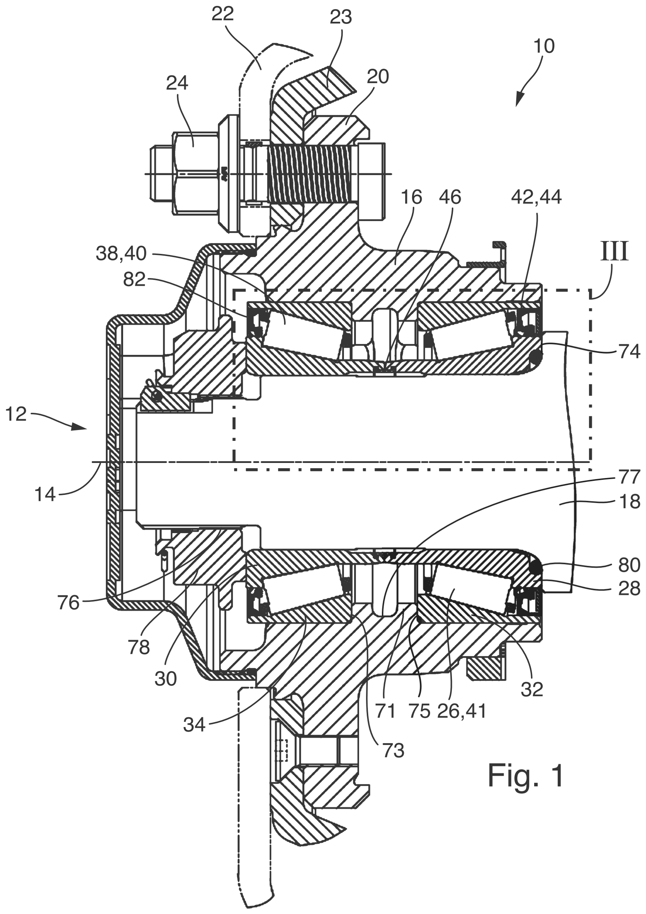

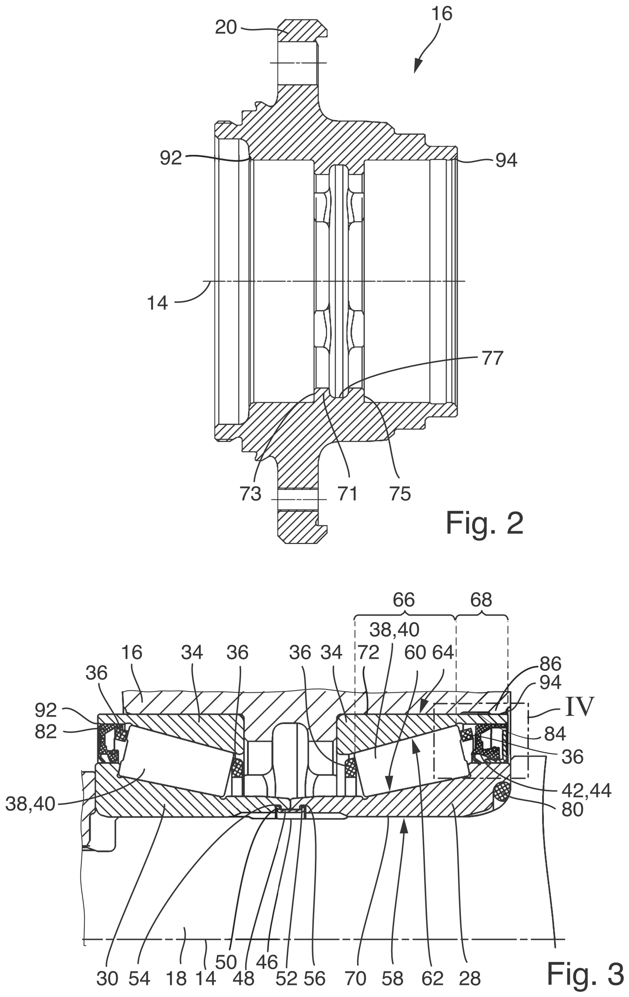

Die Figur 1 zeigt einen Längsschnitt einer ersten Ausführungsform einer Radlagerung 10 einer Achse 12, insbesondere eines Nutzfahrzeugs oder eines Nutzfahrzeuganhängers, entlang einer parallel zu einer Achsenlängsachse 14 verlaufenden Schnittebene. Die Radlagerung 10 umfasst eine Radnabe 16 und einen Achskörper 18, der sich entlang einer Achsenlängsachse 14 erstreckt. Die Figur 2 zeigt einen Längsschnitt einer ersten Ausführungsform der Radnabe 16 in der entlang einer parallel zu einer Achsenlängsachse 14 verlaufenden Schnittebene gemäß Figur 1. Die Figur 3 zeigt einen Längsschnitt der Radlagerung gemäß Figur 1 in einem in Figur 1 mit III bezeichneten Bereich.

Die Radnabe 16 umfasst Flanschelemente 20, die im montierten Zustand einer Fahrzeugaußenseite zugewandt und insbesondere in einem äußeren Abschnitt der Radlagerung 10 angeordnet sind und als Aufnahme für ein nur angedeutetes Fahrzeugrad 22 dienen. Das Fahrzeugrad 22 ist über Radbolzen 24 drehfest mit der Radnabe 16 verbunden. Zwischen Fahrzeugrad 22 und Flanschelemente 20 ist eine Bremstrommel 23 angeordnet. Ferner umfasst die Radlagerung 10 ein zwischen der Radnabe 16 und dem Achskörper 18 angeordnetes Wälzlager 26.

Wie aus Figur 3 ersichtlich, umfasst das Wälzlager 26 einen Innenring 28 und einen weiteren Innenring 30. Ferner umfasst das Wälzlager 26 einen Außenring 32 und einen weiteren Außenring 34. Das Wälzlager 26 umfasst in einem Käfig 36 geführte und als Kegelrollen 38 ausgebildete Wälzkörper 40. Das Wälzlager 26 ist also als zweireihiges Kegelrollenlager 41 ausgebildet. Weiter umfasst das Wälzlager 26 ein als Radialwellendichtring 42 ausgebildetes Dichtungselement 44, das zwischen dem Innenring 28 und dem Außenring 32 auf einer der Fahrzeugaußenseite abgewandten Fahrzeuginnenseite des Wälzlagers 26 angeordnet ist. Der Innenring 28 und der weitere Innenring 30 sind über ein Verbindungselement 46 verschiebefest miteinander entlang der Achsenlängsachse 14 miteinander verbunden.

Das Verbindungselement 46 ist insbesondere C- und/oder U-förmig ausgebildet. Es umfasst einen sich entlang und/oder parallel zu der Achsenlängsachse 14 erstreckenden Basisabschnitt 48 und mindestens zwei Schenkel 50, 52, die sich vorzugsweise orthogonal zu dem Basisabschnitt 48 radial nach außen erstrecken. Die Schenkel 50, 52 greifen in korrespondierend angeordnete Ausnehmungen 54, 56 der Innenringe 28, 30 ein. Das Verbindungselement 46 verhindert somit eine axiale Relativbewegung der Innenringe 28, 30.

Der Innenring 28 weist eine radial innen liegende Innenringinnenseite 58 und eine radial außen liegende Innenringaußenseite 60 auf. Der Außenring 32 weist eine radial innen liegen Außenringinnenseite 62 und eine radial außen liegende Außenringaußenseite 64 auf. Die Außenringinnenseite 62 weist einen mit den Wälzkörpern 40 in Berührkontakt stehenden Wälzabschnitt 66 auf. Ferner weist die Außenringinnenseite 62 einen axial neben dem Wälzabschnitt 66 liegenden, mit dem Dichtungselement 44 in Kontakt stehenden Dichtabschnitt 68 auf.

Die Innenringinnenseite 58 ist über einen Presssitz 70 drehfest mit dem Achskörper 18 verbunden. Die Außenringaußenseite 64 ist über einen Presssitz 72 drehfest mit dem Achskörper 18 verbunden. Der Innenring 28 und der weitere Innenring 30 sind einerseits über eine Schulter 74 und andererseits über eine auf ein Gewinde 76 des Achskörpers 18 aufgeschraubte Achsmutter 78 axial entlang der Achsenlängsachse 14 in ihrer Position fixiert.

Zwischen dem Außenring 32 und dem weiteren Außenring 34 ist ein durch die Radnabe 16 gebildeter Trennabschnitt 71 angeordnet, der zwei Schultern 73, 75 umfasst, gegen die sich die beiden Außenringe 32, 34 axial entlang der Achsenlängsachse 14 abstützen können. Der Trennabschnitt 71 weist eine, insbesondere als Schmierstoffreservoir wirksame, Aussparung 77 auf. Die Aussparung 77 ist insbesondere mittig in dem Trennabschnitt 71 entlang der Achsenlängsachse 14 angeordnet und nach radial innen geöffnet.

Die Radlagerung 10 umfasst ein zusätzliches Dichtungselement 80, das zwischen einer der Fahrzeuginnenseite zugewandten Seite des Innenrings 28 und dem Achskörper 18 angeordnet ist. Ferner umfasst die Radlagerung 10 ein weiteres Dichtungselement 82, das zwischen dem weiteren Innenring 30 und dem weiteren Außenring 34 des Wälzlagers 26 angeordnet ist.

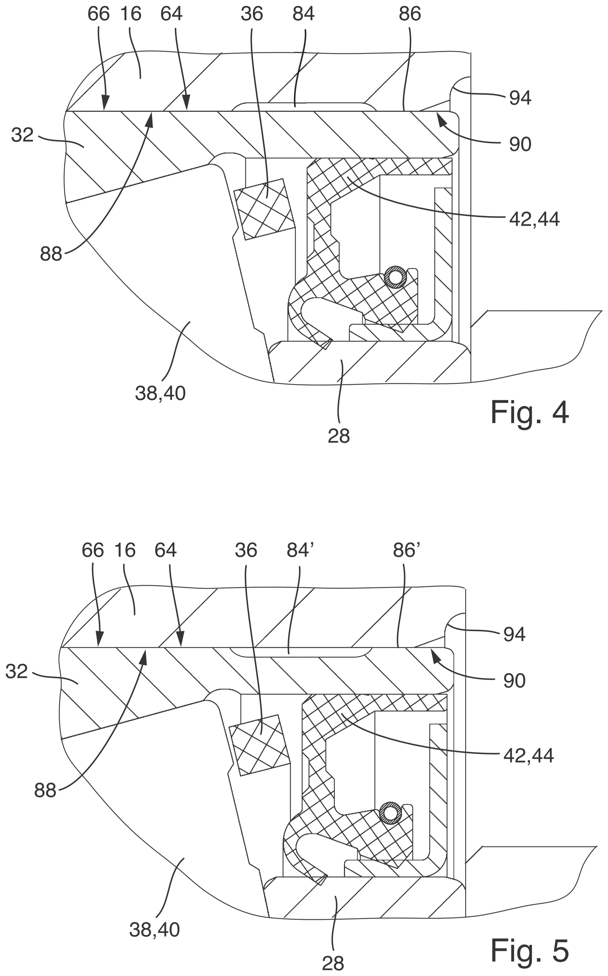

Die Figur 4 zeigt einen Längsschnitt der Radlagerung (10) gemäß der Figuren 1 und 3 in einem in Figur 3 mit IV bezeichneten Bereich.

Die Radnabe 16 weist in einem Bereich, an dem die Außenringaußenseite 64 anliegt und der dem Dichtabschnitt 68 gegenüberliegt, eine in axialer Richtung geschlossene Ausnehmung 84 auf. Die Ausnehmung 84 ist axial durch einen Anlagebereich 86, in dem die Radnabe 16 und die Außenringaußenseite 64 aneinander radial anliegen, begrenzt. Die Ausnehmung 84 ist also axial beiderseits durch die Radnabe 16 geschlossen. Die Ausnehmung 84 ist insbesondere als um die Achsenlängsachse 14 umlaufende Ringausnehmung und/oder Ringnut ausgebildet.

Wie Figur 3 zeigt, sind die Ausnehmung 84 und der Anlagebereich 86 in einem inneren Abschnitt der Radlagerung 10 und/oder der Radnabe 16 und/oder des Wälzlagers 26, der axial neben dem äußeren Abschnitt liegt, angeordnet. Insbesondere sind die Ausnehmung 84 und der Anlagebereich 86 in einem den Flanschelementen 20 abgewandten Endbereich des inneren Abschnitts angeordnet. Der Endbereich umfasst insbesondere 1/3, weiter insbesondere 1/4, weiter insbesondere 1/5, der Längserstreckung des Wälzlagers 40 entlang der Achsenlängsachse 14.

Der Anlagebereich 86 erstreckt sich entlang der Achsenlängsachse 14 in einem dem Wälzabschnitt 66 abgewandten Endbereich des Dichtabschnitts 68. Dieser Endbereich des Dichtabschnitts 68 ist somit insbesondere auch den Flanschelementen 20 abgewandt angeordnet. Der Endbereich umfasst insbesondere 1/3, weiter insbesondere 1/4, weiter insbesondere 1/5, der Längserstreckung des Dichtabschnitts 68 entlang der Achsenlängsachse 14.

Wie Figur 4 zeigt, weist die Radnabe 16 in einem Bereich, an dem die Außenringaußenseite 64 anliegt und der dem Wälzabschnitt 66 gegenüberliegt, eine um die Achsenlängsachse 14 umlaufende Stützfläche 88 auf. Ferner weist die Radnabe 16 in dem Anlagebereich 86 eine mit dem Außenring 32 in Berührkontakt stehende, um die Achsenlängsachse 14 umlaufende Anlagefläche 90 auf. Die Stützfläche 88 und die Anlagefläche 90 sind konzentrisch, insbesondere in Bezug zu der Achsenlängsachse 14, angeordnet und weisen den gleichen Innendurchmesser auf.

Die Figur 5 zeigt einen Längsschnitt einer zweiten Ausführungsform einer erfindungsgemäßen Radlagerung entlang einer parallel zu einer Achsenlängsachse verlaufenden Schnittebene in einem Bereich gemäß Figur 4.

Der Außenring 32 kann in einem Bereich, der dem Dichtabschnitt 68 gegenüberliegt, ebenfalls eine in axialer Richtung geschlossene Ausnehmung 84' aufweisen. Die Ausnehmung 84' ist axial durch einen Anlagebereich 86', in dem die Radnabe 16 und die Außenringaußenseite 64 aneinander radial anliegen, begrenzt. Die Ausnehmung 84' ist also axial beiderseits durch den Außenring 32 begrenzt. Die Ausnehmung 84' ist insbesondere als um die Achsenlängsachse 14 umlaufende Ringausnehmung und/oder Ringnut ausgebildet.

Wie die Figuren 2 bis 5 zeigen, weist die Radnabe an der Fahrzeugaußenseite und an der Fahrzeuginnenseite Einführschrägen 92, 94 auf, die insbesondere um die Achsenlängsachse 14 umlaufend angeordnet sind.

Die Erstreckung der Ausnehmung 84, 84' entlang der Achsenlängsachse 14 beträgt 2 bis 100, insbesondere 5 bis 50, weiter insbesondere 10 bis 20, Mal der Differenz des Innenradius der Radnabe 16 im Bereich der Ausnehmung 84, 84' und des Innenradius der Radnabe 16 im Bereich, in dem die Außenringaußenseite 64 an der Radnabe 16 anliegt, insbesondere in einem dem Wälzabschnitt 66 gegenüberliegenden Bereich und/oder in dem Anlagebereich 86, 86'.

Die Erstreckung der Ausnehmung 84, 84' entlang der Achsenlängsachse 14 beträgt 0,02 bis 0,2, insbesondere 0,05 bis 0,15, weiter insbesondere 0,07 bis 0,1, Mal der Erstreckung des Wälzlagers 26 entlang der Achsenlängsachse 14.

Die Erstreckung des Anlagebereichs 86, 86' und/oder der Anlagefläche 90entlang der Achsenlängsachse 14 beträgt 0,1 bis 2, insbesondere 0,2 bis 1,5, weiter insbesondere 0,5 bis 1,2, Mal der Erstreckung der Ausnehmung 84, 84' entlang der Achsenlängsachse 14.

### Bezugszeichenliste

10 Radlagerung
12 Achse
14 Achsenlängsachse
16 Radnabe
18 Achskörper
20 Flanschelemente
22 Fahrzeugrad
23 Bremstrommel
24 Radbolzen
26 Wälzlager
28 Innenring
30 Innenring
32 Außenring
34 Außenring
36 Käfig
38 Kegelrollen
40 Wälzkörper
41 Kegelrollenlager
42 Radialwellendichtring
44 Dichtungselement
46 Verbindungselement
48 Basisabschnitt
50 Schenkel
52 Schenkel
54 Ausnehmung
56 Ausnehmung
58 Innenringinnenseite
60 Innenringaußenseite
62 Außenringinnenseite
64 Außenringaußenseite
66 Wälzabschnitt
68 Dichtabschnitt
70 Presssitz
71 Trennabschnitt
72 Presssitz
73 Schulter
74 Schulter
75 Schulter
76 Gewinde
77 Aussparung
78 Achsmutter
80 Dichtungselement
82 Dichtungselement
84 Ausnehmung
84' Ausnehmung
86 Anlagebereich
86' Anlagebereich
88 Stützfläche
90 Anlagefläche
92 Einführschräge
94 Einführschräge

## Patentansprüche

1. Radlagerung (10) einer sich entlang einer Achsenlängsachse (14) ersteckenden Achse (12) umfassend:
- einen Achskörper (18),
- eine Radnabe (16) mit im montierten Zustand einer Fahrzeugaußenseite zugewandten Flanschelementen (20) als Aufnahme für ein Fahrzeugrad (22),
- ein zwischen dem Achskörper (18) und der Radnabe (16) angeordnetes Wälzlager (26), das einen Innenring (28), einen Außenring (32), zwischen dem Innenring (28) und dem Außenring (32) angeordnete Wälzkörper (40) und ein Dichtungselement (44) umfasst,
wobei der Innenring (28) und der Außenring (32) jeweils eine radial innen liegende Innenseite (58, 62) und jeweils eine radial außen liegende Außenseite (60, 64) aufweisen,
wobei die Innenseite des Außenrings (62) einen mit den Wälzkörpern (40) in Berührkontakt stehenden Wälzabschnitt (66) und einen axial neben dem Wälzabschnitt (66) liegenden, mit dem Dichtungselement (44) in Kontakt stehenden Dichtabschnitt (68) aufweist,
wobei die Innenseite des Innenrings (58) drehfest mit dem Achskörper (18) und die Außenseite des Außenrings (64) drehfest mit der Radnabe (16) verbunden sind,
**dadurch gekennzeichnet, dass**
die Radnabe (16) in einem Bereich, an dem die Außenseite des Außenrings (64) anliegt, eine sich wenigstens weitgehend in einem dem Dichtabschnitt (68) gegenüberliegenden Bereich erstreckende, in axialer Richtung geschlossene Ausnehmung (84) aufweist, wobei die Ausnehmung (84) axial durch einen Anlagebereich (86), in dem die Radnabe (16) und die Außenseite des Außenrings (64) aneinander anliegen, begrenzt ist.

2. Radlagerung (10) nach Anspruch 1, **dadurch gekennzeichnet, dass** der Außenring (32) eine in axialer Richtung geschlossene Ausnehmung (84') aufweist, die sich wenigstens weitgehend in einem Bereich, der dem Dichtabschnitt (68) gegenüberliegt, erstreckt, wobei die Ausnehmung (84') axial durch einen Anlagebereich (86'), in dem die Radnabe (16) und die Außenseite des Außenrings (64) aneinander anliegen, begrenzt ist.

3. Radlagerung (10) nach Anspruch 1 oder 2, **dadurch gekennzeichnet, dass** die Ausnehmung (84, 84') als umlaufende Ringausnehmung ausgebildet ist.

4. Radlagerung (10) nach einem der vorstehenden Ansprüche, **dadurch gekennzeichnet, dass** die Radnabe (16) in einem Bereich, an dem die Außenseite des Außenrings (64) anliegt und der dem Wälzabschnitt (66) gegenüberliegt, eine umlaufende Stützfläche (88) aufweist,
wobei die Radnabe (16) in dem Anlagebereich (86) eine mit dem Außenring (32) in Berührkontakt stehende Anlagefläche (90) aufweist,
wobei die Stützfläche (88) und die Anlagefläche (90) konzentrisch zueinander angeordnet sind und insbesondere den gleichen Innendurchmesser aufweisen.

5. Radlagerung (10) nach einem der vorstehenden Ansprüche, **dadurch gekennzeichnet, dass** sich die Flanschelemente (20) axial entlang der Achsenlängsachse (14) in einem äußeren Abschnitt erstrecken, wobei die Radlagerung (10) und/oder die Radnabe (16) und/oder das Wälzlager (26) einen axial neben dem äußeren Abschnitt liegenden inneren Abschnitt umfasst, wobei die Ausnehmung (84, 84') und der Anlagebereich (86, 86') in dem inneren Abschnitt, insbesondere in einem den Flanschelementen (20) abgewandten Endbereich des inneren Abschnitts, angeordnet sind.

6. Radlagerung (10) nach einem der vorstehenden Ansprüche, **dadurch gekennzeichnet, dass** sich der Anlagebereich (86, 86') entlang der Achsenlängsachse (14) in einem dem Wälzabschnitt (66) abgewandten Endbereich des Dichtabschnitts (68) erstreckt.

7. Radlagerung (10) nach einem der vorstehenden Ansprüche, **dadurch gekennzeichnet, dass** die Erstreckung der Ausnehmung (84, 84') entlang der Achsenlängsachse (14) 2 bis 100, insbesondere 5 bis 50, weiter insbesondere 10 bis 20, Mal der Differenz des Innenradius der Radnabe (16) im Bereich der Ausnehmung (84, 84') und des Innenradius der Radnabe (16) im Bereich, in dem die Außenseite des Außenrings (64) an der Radnabe (16) anliegt, beträgt.

8. Radlagerung (10) nach einem der vorstehenden Ansprüche, **dadurch gekennzeichnet, dass** die Erstreckung der Ausnehmung (84, 84') entlang der Achsenlängsachse (14) 0,02 bis 0,2, insbesondere 0,05 bis 0,15, weiter insbesondere 0,07 bis 0,1, Mal der Erstreckung des Wälzlagers (26) entlang der Achsenlängsachse (14) beträgt.

9. Radlagerung (10) nach einem der vorstehenden Ansprüche, **dadurch gekennzeichnet, dass** die Erstreckung des Anlagebereichs (86, 86') und/oder der Anlagefläche (90) entlang der Achsenlängsachse (14) 0,1 bis 2, insbesondere 0,2 bis 1,5, weiter insbesondere 0,5 bis 1,2, Mal der Erstreckung der Ausnehmung (84, 84') entlang der Achsenlängsachse (14) beträgt.

10. Radlagerung (10) nach einem der vorstehenden Ansprüche, **dadurch gekennzeichnet, dass** die Erstreckung des Anlagebereichs (86, 86') und/oder der Anlagefläche (90) entlang der Achsenlängsachse (14) 0,1 bis 2, insbesondere 0,2 bis 1,5, weiter insbesondere 0,3 bis 1, Mal der Erstreckung des Dichtungselements (44) entlang der Achsenlängsachse (14) beträgt.

11. Radlagerung (10) nach einem der vorstehenden Ansprüche, **dadurch gekennzeichnet, dass** die Radlagerung (10) ein weiteres zumindest teilweise in dem Wälzlager (26) angeordnetes Dichtungselement (44) umfasst, das insbesondere an einer der Fahrzeugaußenseite zugewandten Seite des Wälzlagers (26) angeordnet ist.

12. Radlagerung (10) nach einem der vorstehenden Ansprüche, **dadurch gekennzeichnet, dass** die Radlagerung (10) ein zusätzliches Dichtungselement (80) umfasst, das zwischen dem Innenring (28) und dem Achskörper (18) angeordnet ist.

13. Radlagerung (10) nach einem der vorstehenden Ansprüche, **dadurch gekennzeichnet, dass** das Wälzlager (26) ein mehrreihiges, insbesondere ein zweireihiges, Wälzlager ist, wobei das Wälzlager (26) mehrere, insbesondere zwei, separat voneinander bereitgestellte Innenringe (28, 30) umfasst, die durch ein Verbindungselement (46) verschiebefest entlang der Achsenlängsachse (14) miteinander verbunden sind.

14. Radlagerung (10) nach einem der vorstehenden Ansprüche, **dadurch gekennzeichnet, dass** das Wälzlager (26) ein mehrreihiges, insbesondere ein zweireihiges, Wälzlager ist, wobei das Wälzlager (26) mehrere, insbesondere zwei, separat voneinander bereitgestellte Außenringe (32, 34) umfasst.

15. Radlagerung (10) nach Anspruch 14, **dadurch gekennzeichnet, dass** das Wälzlager (26) ein zweireihiges Schrägkugellager oder zweireihiges Kegelrollenlager (41) ist, wobei zwischen den mehreren Außenringen (32, 34) mindestens ein durch die Radnabe gebildeter Trennabschnitt (71) angeordnet ist, der mindestens eine Schulter (73) umfasst, gegen die sich die mehreren Außenringe (32, 34) axial abstützen können.

16. Radlagerung (10) nach Anspruch 15, **dadurch gekennzeichnet, dass** der Trennabschnitt (71) eine, insbesondere als Schmierstoffreservoir wirksame, Aussparung (77) aufweist.

17. Radnabe (16) mit im montierten Zustand einer Fahrzeugaußenseite zugewandten Flanschelementen (20) als Aufnahme für ein Fahrzeugrad (22),
wobei sich die Radnabe (16) entlang einer Achsenlängsachse (14) erstreckt,
wobei die Radnabe (16) dazu ausgebildet ist, mit einem einen Innenring (28), einen Außenring (32), Wälzkörper (40) und ein Dichtungselement (44) umfassenden Wälzlagers (26) in Kontakt zu treten,
wobei die Radnabe (16) in einem Bereich, der dazu ausgebildet ist, an einer Außenseite des Außenrings (64) anzuliegen, eine in axialer Richtung geschlossene Ausnehmung (84) aufweist, wobei die Ausnehmung (84) axial durch einen Anlagebereich (86), in dem die Radnabe (16) dazu ausgebildet ist, an der Außenseite des Außenrings (64) anzuliegen, begrenzt wird.
